# FASCICULE DE BREVET EUROPEEN

(11) **EP 1 544 427 B1**
(45) Date de publication et mention de la délivrance du brevet: **12.09.2007**
(21) Numéro de dépôt: 04300890.3
(22) Date de dépôt: 15.12.2004
(51) Int. Cl.: F01N 3/027, F01N 3/022, F01N 3/01

(54) **Système de filtration électrostatique pour les gaz d'échappement d'un moteur à combustion interne**
Elektrostatisches Filtersystem für die Abgase einer Brennkraftmaschine
Electrostatic filtration system for the exhaust gases of an internal combustion engine

(30) Priorité: 19.12.2003 FR 0315091
(43) Date de publication de la demande: 22.06.2005
(73) Titulaire: RENAULT s.a.s., 92100 Boulogne Billancourt (FR)
(72) Inventeur: Jeandel, Xavier, 78340 Les Clayes Sous Bois (FR); Trichard, Jean-Michel, 78180 Montigny Le Bretonneux (FR)

(56) Documents cités:
- EP-A- 0 469 277
- WO-A-95/06510
- WO-A-98/48922
- WO-A-03/084665
- FR-A- 2 839 903
- GB-A- 2 158 055
- US-A- 5 474 747

## Description

La présente invention concerne des systèmes de filtration électrostatique des particules de suie contenues dans les gaz d'échappement des moteurs à combustion interne, en particulier des moteurs diesel, pour véhicules automobiles, du type comprenant au moins une cellule élémentaire de filtration traversée par les gaz d'échappement.

On cherche à l'heure actuelle à diminuer au maximum les émissions polluantes des moteurs à combustion interne utilisés dans les véhicules automobiles et, en particulier, à réduire ou éliminer l'émission de particules de suie par les moteurs diesel.

La demanderesse a mis au point un système de filtration électrostatique qui a fait l'objet du dépôt d'une demande de brevet français n° 02 06 304 avec le numéro de publication FR 2 839 903 A. Cette demande de brevet décrit un dispositif de filtration comprenant un passage pour les gaz d'échappement, une électrode externe entourant le passage, formée par un agglomérat ou un enchevêtrement de fibres métalliques perméables au gaz et apte à retenir mécaniquement des particules. Une électrode interne est disposée selon l'axe du passage et des moyens d'alimentation électrique des électrodes permettent d'établir un champ électrique avec formation de décharges couronne pour une filtration électrostatique des particules. Grâce à l'existence de cette électrode externe jouant le rôle de cathode poreuse par l'enchevêtrement de fils métalliques, en coopération avec l'anode centrale, on obtient simultanément une filtration mécanique et une filtration de type électrostatique. En effet, les particules empruntant le passage dans la cellule de filtration sont amenées à traverser la cathode poreuse externe formée par l'agglomérat ou l'enchevêtrement de fibres métalliques qui constitue une multitude d'obstacles permettant l'interception des particules par un processus mécanique intensifié par les interactions électrostatiques entre les fibres reliées à la masse et les particules chargées électriquement.

En cas de fonctionnement d'un moteur diesel à forte charge, les gaz d'échappement peuvent contenir une quantité importante de particules de suie. La filtration obtenue à l'aide d'une cellule élémentaire peut être insuffisante.

La présente invention propose un système de purification des gaz d'échappement permettant d'éliminer des particules contenues dans les gaz d'échappement et qui soit compact.

Un tel système de filtration des particules de suie contenues dans les gaz d'échappement d'un moteur à combustion interne, comprend des cellules élémentaires de filtration comportant un passage, une électrode externe entourant le passage et perméable aux gaz, une électrode interne s'étendant dans le passage, les gaz pénétrant dans le passage et ressortant en traversant l'électrode externe, Selon un aspect de l'invention, le système comprend une pluralité de cellules élémentaires de filtration maintenues fixes les unes relativement aux autres, et disposées parallèlement dans une configuration tridimensionnelle en étant maintenues espacées les unes des autres.

La prévision d'une pluralité de cellules élémentaires de filtration permet d'améliorer la filtration en évitant de surcharger une cellule élémentaire de filtration, La disposition des cellules élémentaires de filtration en parallèle dans une configuration tridimensionnelle permet de les disposer selon un motif favorisant la compacité du système dans un plan perpendiculaire aux axes principaux des cellules élémentaires de filtration. L'espacement maintenu entre les filtres permet d'éviter des perturbations de l'écoulement des gaz depuis l'intérieur vers l'extérieur de chacune des cellules élémentaires de filtration. Le motif d'agencement des cellules élémentaires de filtration est prévu pour minimiser de telles perturbations.

Dans un mode de réalisation, le système de purification des gaz d'échappement comprend une enveloppe collectrice commune entourant l'ensemble des cellules élémentaires de filtration pour récupérer les gaz d'échappement sortant des cellules élémentaires de filtration. L'enveloppe collectrice commune permet de rapprocher les filtres élémentaires pour améliorer la compacité du système tout en permettant la récupération des gaz d'échappement sortant de l'ensemble des filtres élémentaires.

Les cellules élémentaires de filtration peuvent être agencées en au moins deux rangées superposées, une rangée pouvant être décalée latéralement relativement à une rangée adjacente. Les cellules élémentaires de filtration peuvent aussi être arrangées selon un motif en hexagone.

Pour éviter des perturbations des écoulements des gaz sortant des cellules élémentaires de filtration, on peut prévoir des séparateurs disposés entre les cellules élémentaires de filtration pour séparer les écoulements des gaz en sortie des filtres. A cet effet, au moins une cellule élémentaire de filtration peut être insérée dans une chemise de séparation entourant la cellule. Une telle chemise de séparation peut présenter par exemple en section un profil en cercle ou en hexagone.

Dans un mode de réalisation simple et particulièrement compact, les cellules élémentaires de filtration sont maintenues en étant fixées d'un côté d'une entrée des passages sur un flasque d'entrée ouvert en regard desdits passages des cellules élémentaires de filtration. Les cellules élémentaires de filtration peuvent ainsi être alimentées en gaz d'échappement par un unique cône d'admission compact. Un cône d'admission peut être muni d'une entrée de petit diamètre et d'une sortie de grand diamètre débouchant sur le flasque d'entrée.

Avantageusement, le système comprend des moyens pour uniformiser un écoulement en sortie du cône d'admission. Pour ce faire, le cône d'admission peut être muni d'un déflecteur aérodynamique conique. La sortie du cône peut également être munie d'un élément aérodynamique disposé en travers de la sortie du cône pour introduire une perte de charge uniformément sur toute la section de la sortie du cône. Ainsi, les différentes cellules élémentaires de filtration du système sont alimentées en gaz d'échappement de façon uniforme, ce qui permet de maintenir une filtration efficace des gaz d'échappement chargés de particules en toutes circonstances.

Dans un mode de réalisation, les cellules élémentaires de filtration sont maintenues du côté opposé à une entrée des passages par un flasque de sortie pourvu d'ouvertures pour l'évacuation des gaz d'échappement.

La présente invention et ses avantages seront mieux compris à l'étude de la description détaillée de modes de réalisation pris à titre d'exemples nullement limitatifs et illustrés par les dessins annexés sur lesquels :
- la figure 1 est une vue schématique en coupe longitudinale d'un système de filtration selon un aspect de l'invention ;
- les figures 2, 3 et 4 sont des vues schématiques en coupe transversale d'un système de filtration selon un aspect de l'invention ;
- les figures 5 et 6 représentent des vues en coupe longitudinale d'une variante du système de filtration selon la figure 1, dans lesquelles le système est muni de séparateurs ;
- les figures 7 à 11 représentent des vue en coupe transversale de systèmes de filtration conformes à l'invention munis de séparateurs ; et
- les figures 12 et 13 représentent des vues en coupe longitudinale d'un cône d'admission situé en amont d'un ensemble de cellules élémentaires de filtration, pour une répartition uniforme d'un flux de gaz d'échappement dans les cellules élémentaires de filtration.

Dans toute la description, et sur les différentes figures, les éléments similaires des différents modes de réalisation portent les mêmes numéros de référence.

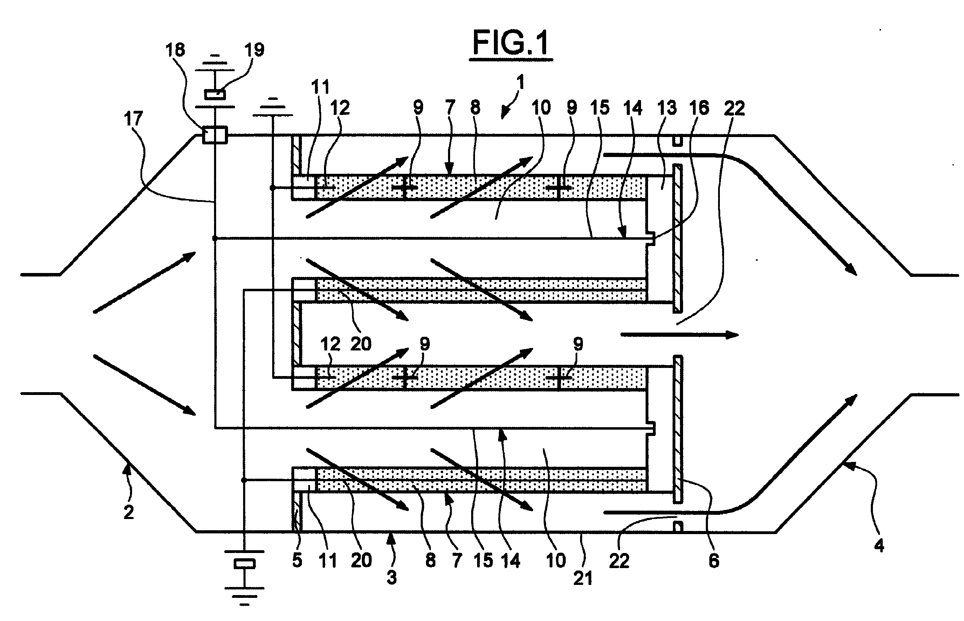

Sur la figure 1, un système de filtration électrostatique référencé 1 dans son ensemble comprend un cône d'admission 2, une unité de filtration 3, et un cône de sortie 4. L'unité de filtration 3 comprend un premier flasque 5 disposé en travers de la sortie de grand diamètre du cône d'admission 2, et un second flasque 6 disposé en travers de l'entrée de grand diamètre du cône de sortie 4.

Des cellules élémentaires de filtration 7 sont disposées dans l'unité de filtration 3 en s'étendant entre les premier et second flasques 5, 6. Chaque cellule élémentaire de filtration 7 comprend une électrode externe 8 de forme générale cylindrique et formée par un agglomérat ou un enchevêtrement de fibres métalliques. L'électrode externe 8 comprend des croisillons métalliques 9 noyés dans l'épaisseur de l'électrode externe 8 et répartis circonférentiellement et axialement dans l'épaisseur de l'électrode externe 8 pour augmenter sa rigidité et assurer une continuité électrique de l'électrode 8. L'électrode 8 forme un passage axial 10 qu'elle entoure.

L'électrode externe 8 présente du côté du premier flasque 5 une face frontale en contact axial avec une couronne isolante 11 de fixation de l'électrode externe 8 sur le premier flasque 5. La couronne 11 est traversée par un conducteur 12 reliant l'électrode externe 8 à une masse de potentiel nul. Le premier flasque 5 présente des ouvertures en regard des passages 10 des cellules élémentaires de filtration, de sorte que le passage central 10 communique avec le cône d'admission 2.

L'électrode externe 8 est fixée du côté opposé sur le second flasque 6 par l'intermédiaire d'un disque isolant 13 en appui axial par une surface radiale contre une surface frontale de l'électrode externe 8 et par une surface radiale opposée contre le second flasque 6. Le disque 13 ferme axialement le passage central 10 du côté opposé au cône d'admission 2.

Une cellule élémentaire de filtration 7 comprend également une électrode centrale filaire 14 sous la forme d'une tige 15 coaxiale à l'électrode externe 8 et dont une extrémité 16 est enfichée dans le disque isolant 13. L'électrode interne 14 s'étend axialement depuis son extrémité 16 au-delà de la couronne de fixation 11 en étant coudée pour former une portion 17 sortant du cône d'admission 2 par une ouverture formée dans une paroi du cône d'admission 2, Un isolateur 18 est disposé dans l'ouverture pour isoler électriquement la paroi du cône d'admission 2 de l'électrode interne 14, qui est reliée électriquement à une source de tension 19.

Une cellule élémentaire de filtration 7 comprend des moyens de chauffage de l'électrode externe 8 sous la forme de conducteurs 20, isolés ou non de l'électrode externe 8 et disposés axialement dans l'électrode externe 8 en étant noyés dans l'épaisseur de cette dernière.

L'unité de filtration 3 comprend une enveloppe collectrice 21 entourant l'ensemble des filtres élémentaires 7. L'enveloppe collectrice 21 est fermée. Le second flasque 6 est muni d'ouvertures 22 en regard des in.terstices formées entre les surfaces extérieures des électrodes externes 8 des cellules élémentaires de filtration 7.

En fonctionnement, les gaz d'échappement chargés de particules entrent dans le cône d'admission 2 par l'entrée de petit diamètre puis ressortent par la sortie de grand diamètre. Les gaz d'échappement rencontrant le premier flasque 5 s'engouffrent dans les passages 10 des cellules élémentaires de filtration 7. Les gaz d'échappement traversent ensuite les électrodes externes 8 de chacune des cellules élémentaires de filtration 7 et se retrouvent dans les interstices entre les électrodes externes 8 et l'enveloppe collectrice 21. Les gaz d'échappement emprisonnés par l'enveloppe collectrice 21 se déplacent vers la droite sur la figure 1 pour ressortir par les ouvertures 22 du second flasque 6 vers la sortie du cône de sortie 4.

En passant à travers l'électrode externe 8, les gaz d'échappement chargés de particules sont filtrés mécaniquement. En effet, l'électrode externe 8 est formée par un agglomérat ou un enchevêtrement de fils métalliques qui forment de multiples obstacles capables d'intercepter les particules. Ce processus de filtration mécanique est intensifié par une filtration électrostatique résultant des interactions entre l'enchevêtrement de fils métalliques reliés à la masse et les particules chargées électriquement, comme cela sera mieux expliqué, dans la suite de la description,

Par ailleurs, la cellule élémentaire de filtration 7 a également un effet de filtrage électrostatique directe des gaz chargés de particules. L'électrode externe 8 est en effet maintenue à un potentiel nul, l'électrode centrale 14 étant portée à un potentiel positif ou négatif. La différence de potentiel créée entre les électrodes externe 8 et centrale 14 induit la présence d'un champ électrique dans le passage axial 10. Si ce champ électrique possède une intensité suffisante, en particulier au très proche voisinage de l'électrode centrale 14, il se produit une ionisation partielle ou totale des gaz ou du milieu compris entre les électrodes centrale 14 et externe 8. Un milieu gazeux ionisé comprend des électrons libres, des ions positifs et négatifs. Les particules présentes dans le milieu ionisé se combinent avec des électrons ou des ions en formant des particules chargées. De même une avalanche électronique d'une électrode vers l'autre provoque des collisions entre les électrons et les particules qui se combinent pour former des particules chargées négativement.

La circulation radiale des gaz entraîne les particules chargées vers l'électrode externe 8. Les particules chargées traversant l'électrode externe 8 sont piégées par interception sur l'enchevêtrement de fils métalliques et par des phénomènes d'interaction électrostatique du fait des charges électriques portées par lesdites particules. Les forces de Van der Walls et les forces de capillarité maintiennent les particules fixées sur les fils métalliques même après qu'elles aient cédé leur charge électrique.

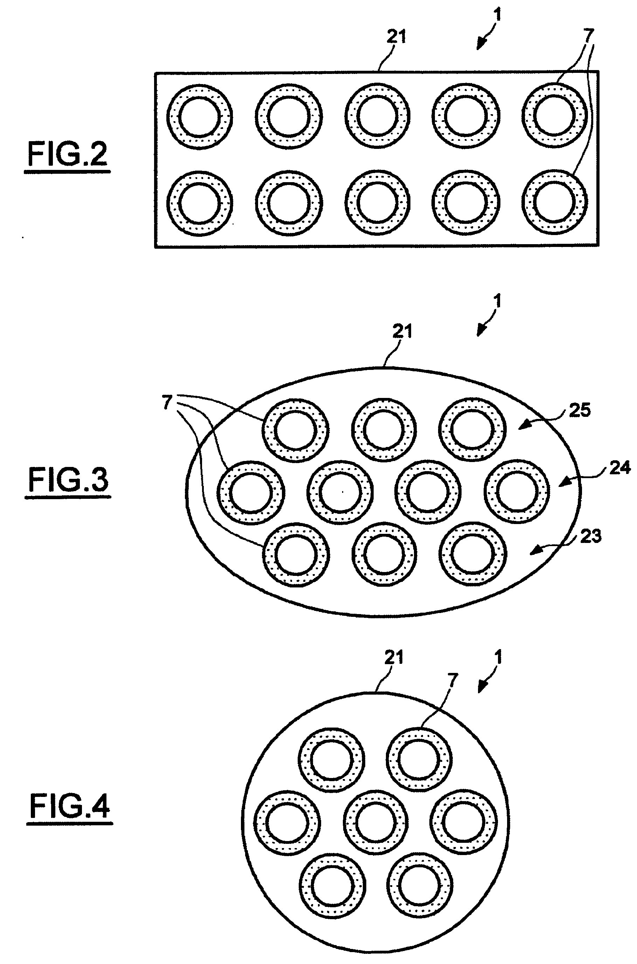

Sur la figure 2, un système de filtration 1 comprend une pluralité de cellules élémentaires de filtration 7, ici au nombre de dix. Les cellules élémentaires de filtration 7 sont arrangées selon une configuration tridimensionnelle et sont ici agencées en deux rangées de cellules superposées. Les cellules élémentaires de filtration 7 s'inscrivent dans un volume parallélépipédique de section rectangulaire. Une enveloppe collectrice commune 21 présente en section un profil rectangulaire épousant le contour des cellules 7 en étant espacées de ces dernières.

Sur la figure 3, des cellules élémentaires de filtration 7 sont disposés en rangées superposées, une rangée étant décalée relativement à une rangée adjacente.

Plus précisément, le système de filtration 1 comprend une rangée inférieure 23 comprenant trois cellules élémentaires de filtration 7 alignées, une rangée intermédiaire 24 comprenant quatre cellules élémentaires de filtration 7 alignées entre elles et décalées relativement aux cellules élémentaires de filtration 7 de la rangée inférieure 23 de façon qu'une cellule élémentaire de filtration d'une rangée se situe en regard d'un espace entre deux cellules élémentaires de filtration adjacentes de l'autre rangée. Le système 1 comprend encore une troisième rangée 25 de cellules élémentaires de filtration 7 comprenant trois cellules élémentaires de filtration 7 décalés relativement aux cellules élémentaires de filtration 7 de la rangée intermédiaire 24. L'ensemble des cellules élémentaires de filtration 7 s'inscrit dans un volume présentant une section ovale. Une enveloppe collectrice commune 21 entoure les cellules élémentaires de filtration 7 et présente en section un profil ovale correspondant.

Sur la figure 4, un système de filtration 1 comprend une pluralité de cellules élémentaires de filtration 7 agencées selon un motif hexagonal. Plus précisément, le système 1 comprend six cellules élémentaires de filtration 7 formant les sommets d'un hexagone et une septième cellule élémentaire de filtration 7 disposé au centre. Les cellules élémentaires de filtration 7 ainsi disposées s'inscrivent dans un volume cylindrique. Une enveloppe collectrice commune 21 entoure les cellules élémentaires 7 et présente en section un profil cylindrique.

Les agencements des figures 2 à 4 permettent de disposer un nombre important de cellules de filtration dans un volume réduit sans que l'écoulement de gaz d'échappement ne soit perturbé.

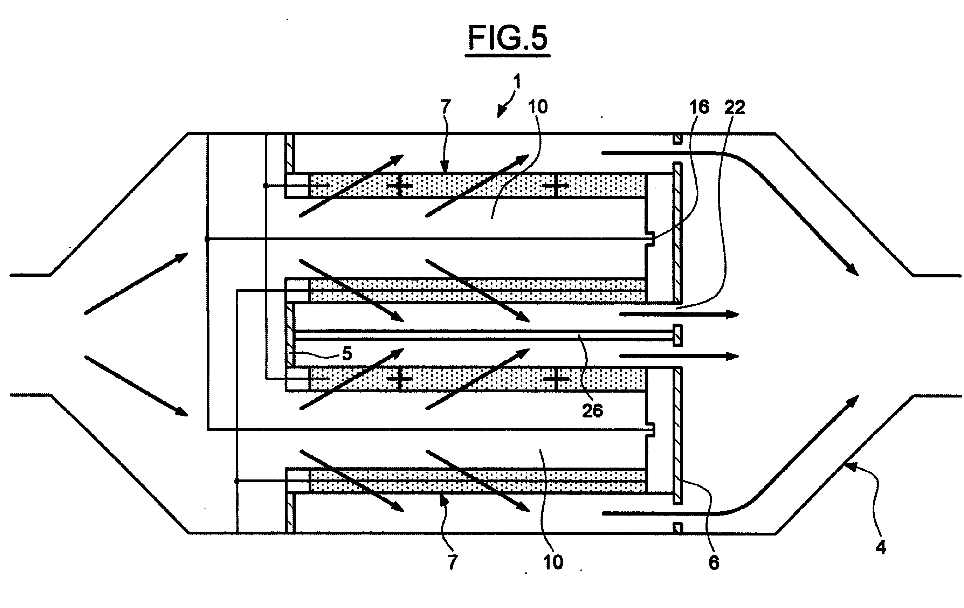

Sur la figure 5, un système de filtration 1 est identique à celui de la figure 1 à ceci près qu'il est muni d'une paroi de séparation 26 interposée entre les cellules élémentaires de filtration 7. La paroi de séparation 26 comprend une extrémité fixée sur le premier flasque 5 et une extrémité opposée fixée sur le second flasque 6.

Les gaz d'échappement sortant du passage axial d'une cellule élémentaire du côté de la parois de séparation 26 sont canalisés vers le second flasque 6 jusqu'à une ouverture 22 ménagée dans le second flasque 6 et située en regard de l'espace compris entre la paroi de séparation 26 et le filtre élémentaire 7, permettant ainsi aux gaz de s'échapper vers le cône de sortie 4.

La paroi de séparation sépare les flux de gaz d'échappement issus des cellules élémentaires adjacentes. Ainsi, l'écoulement des gaz d'échappement en sortie d'une cellule élémentaire ne perturbe pas l'écoulement de gaz d'échappement en sortie de l'autre cellule élémentaire, ce qui permet d'assurer que les gaz d'échappement circulent à travers l'ensemble de l'électrode externe de chaque cellule élémentaire afin d'assurer un fonctionnement satisfaisant et efficace du système de purification des gaz d'échappement.

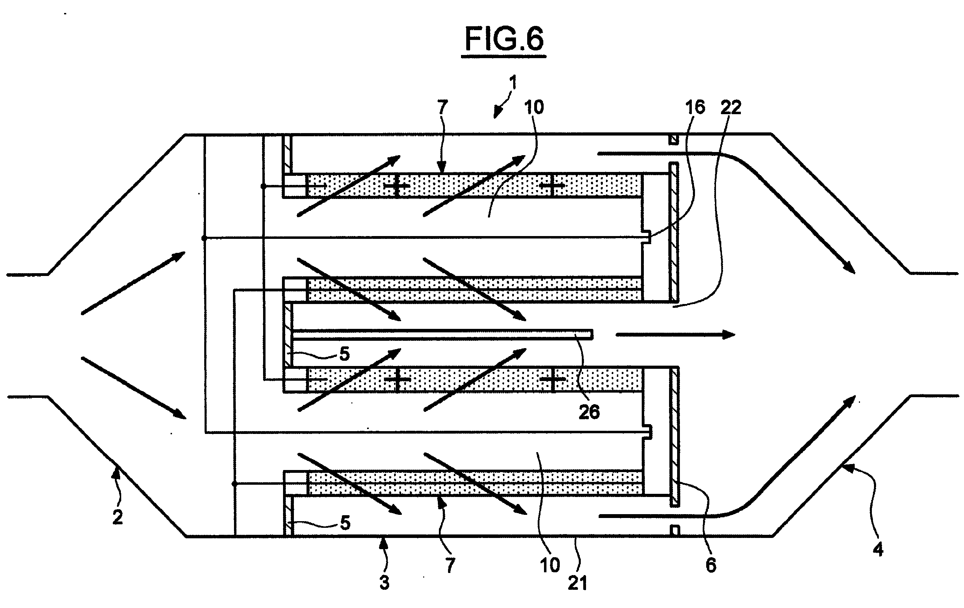

Sur la figure 6, un système de filtration est identique à celui de la figure 5 à ceci près que la paroi de séparation 26 est fixée uniquement d'un côté, sur le premier flasque 5, l'extrémité opposée étant laissée libre, et étant située à distance du second flasque 6. La paroi de séparation 26 s'étend entre les cellules élémentaires 7 sur la majeure partie de leur longueur permettant une canalisation et une séparation efficaces des flux de gaz d'échappement issus de chacun des filtres élémentaires 7. Une ouverture 22 importante peut être préservée sur le flasque 6 pour la sortie des gaz dans le cône de sortie 4.

Une paroi séparatrice peut être prévue simplement sous la forme d'un déflecteur plan ou courbe présentant en section transversale un contour ouvert, et entourant seulement en partie une cellule élémentaire 7.

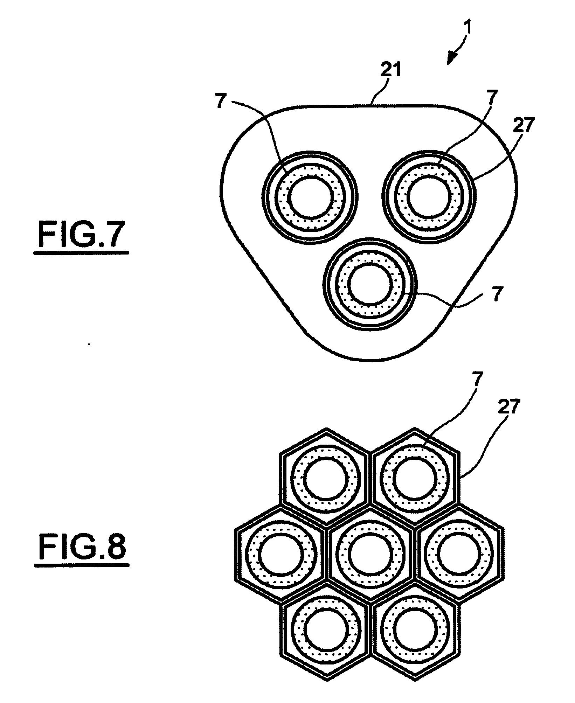

Sur la figure 7, un système de purification des gaz d'échappement 1 comprend des cellules élémentaires 7 ici au nombre de trois et agencées en triangle. Une enveloppe 21 présente un profil général triangulaire avec des sommets arrondis.

Chaque cellule élémentaire 7 est entourée par une chemise 27 de séparation des flux présentant en section transversal un contour fermé pour isoler la cellule. L'écoulement des gaz d'échappement en sortie de chacun des filtres élémentaires peut ainsi être contrôlé.

Sur la figure 8, des cellules élémentaires 7 sont agencées selon un motif en hexagone avec en outre une cellule élémentaire située au centre. Chaque cellule élémentaire 7 est entourée et isolée par une chemise 27 à section hexagonale. Les chemises 27 sont accolées les unes aux autres en formant une structure en nid d'abeille particulièrement pratique pour la fixation des chemises. On obtient ainsi un arrangement particulièrement compact. Les cellules élémentaires peuvent être rapprochés les uns des autres sans que les flux de gaz d'échappement en sortie de cellules élémentaires 7 ne se perturbent les uns les autres.

Lorsque des chemises de séparation de flux de gaz d'échappement sont prévues, différentes dispositions sont envisageables. Avantageusement, une chemise entourant une cellule s'étend d'un premier flasque à un second flasque entre lesquels est maintenue ladite cellule, formant ainsi un logement isolé pour la cellule dans une unité de filtration du type de la figure 5. Le second flasque présente des ouvertures en regard de l'espace annulaire formé entre une cellule élémentaire 7 et une chemise 27 de façon à permettre l'écoulement des gaz d'échappement vers un cône de sortie.

Lorsque toutes les cellules élémentaires sont ainsi munies d'une chemise fixée à ses extrémités sur les premier et second flasques, on peut retirer une enveloppe entourant l'ensemble des cellules, puisqu'elle ne récupère plus les gaz d'échappement ou la conserver comme carter de protection

Dans une variante correspondant à la figure 6, une chemise 27 est fixée sur le premier flasque, son extrémité opposée étant Libre. Ce mode de réalisation est particulièrement adapté dans un cas où on ne prévoit qu'un premier flasque pour la fixation des cellules. Si un second flasque est prévu, les chemises peuvent se terminer à distance du second flasque tout en permettant une canalisation des gaz d'échappement issus des filtres élémentaires 7.

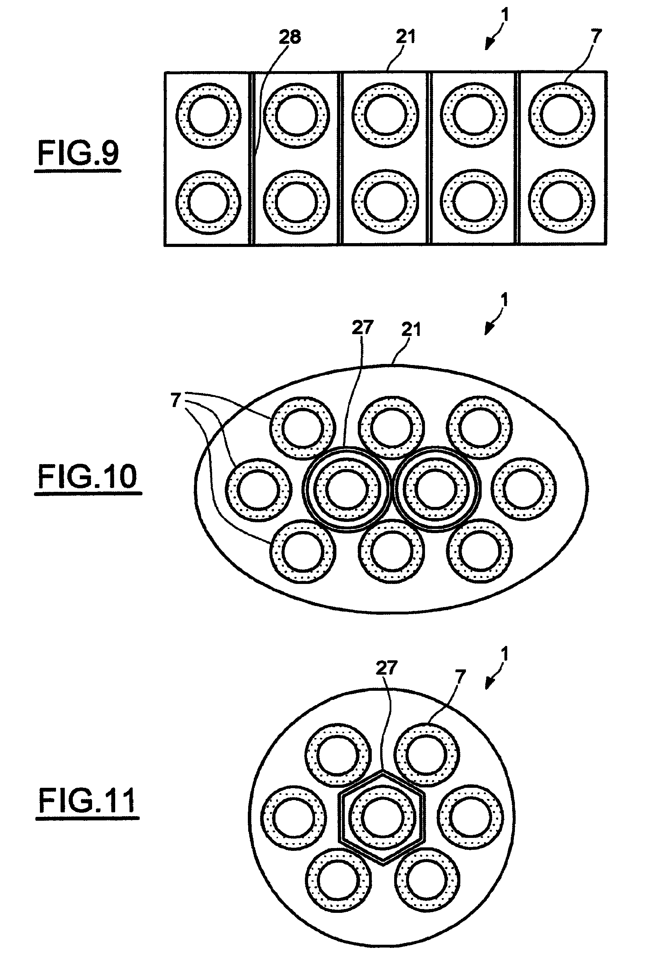

Sur la figure 9, un système de purification des gaz est identique à celui de la figure 2, à ceci près qu'il comprend des parois de séparation 28 s'étendant entre les côtés de plus grande longueur de l'enveloppe 21 formant des compartiments, ici au nombre de cinq, comprenant chacun deux cellules élémentaires 7 superposées. Ainsi, les cellules élémentaires 7 sont regroupées de façon à diminuer une perturbation de l'écoulement des gaz d'échappement. Les cellules élémentaires peuvent ainsi être disposées en étant plus proches dans une direction transversale sans que l'écoulement des gaz d'échappement d'une cellules élémentaire perturbe l'écoulement des gaz issus d'une autre cellule élémentaire adjacente transversalement.

Sur la figure 10, un système de purification des gaz d'échappement 1 est identique à celui de la figure 3, à ceci près que deux cellules élémentaires centrales 7 qui pourraient être particulièrement exposés aux perturbations d'écoulement des gaz d'échappement issus des autres cellules élémentaires 7, sont entourées d'une chemise séparatrice cylindrique 27. Les autres cellules élémentaires 7 sont dépourvues de chemise.

Sur la figure 11, un système de purification des gaz d'échappement 1 est identique à celui de la figure 4 à ceci près que le filtre élémentaire central 7 est muni d'une chemise hexagonale 27.

Dans les modes de réalisation des figures 10 et 11, des chemises sont prévues seulement sur des cellules élémentaires 7 qui sont entourées par plusieurs autres cellules élémentaires 7, et qui sont plus susceptibles d'être perturbées par l'écoulement des gaz sortant des autres cellules. Ainsi, on peut prévoir que seulement une partie des cellules soit munie de chemise. Le système de purification à plusieurs cellules élémentaires de filtration est simplifié et peut être maintenu plus compact.

En revenant à la figure 1, on voit que les gaz d'échappement pénétrant dans le cône d'admission 2 entrent par l'entrée de petit diamètre du cône 2 et ressortent par la sortie de grand diamètre en rencontrant les flasques 5 et se répartissent dans les passages 10 des cellules élémentaires 7. Pour assurer une répartition uniforme des gaz d'échappement dans les cellules élémentaires 7, on peut prévoir des moyens aérodynamiques pour uniformiser un flux de gaz d'échappement au niveau de la sortie du cône d'admission 2.

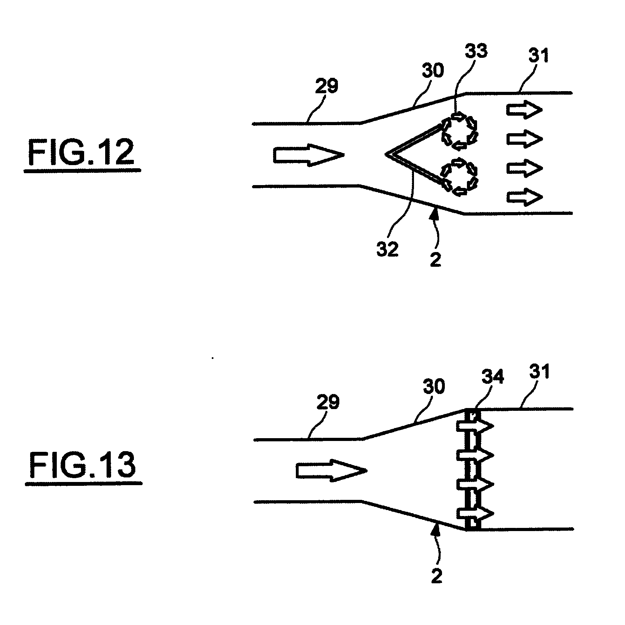

Sur la figure 12, un cône d'admission 2 comprend une entrée 29, une section intermédiaire tronconique 30 et une sortie de grand diamètre 31. Un déflecteur conique 32 ouvert vers la sortie 31 est disposé dans la section intermédiaire tronconique 30. Les gaz pénétrant dans l'entrée 29 sont déviés par le déflecteur 32 vers la zone périphérique de la section intermédiaire tronconique 30. Des turbulences 33 sont créées en arrière du déflecteur 32. Ces turbulences ont pour effet d'uniformiser l'écoulement des gaz d'échappement dans la sortie 31.

Sur la figure 13, un cône d'admission 2 similaire à celui de la figure 12 est dénué de cône déflecteur. En revanche, il est muni d'un élément aérodynamique 34 disposé en travers de la sortie 31 en occupant toute la surface transversale de cette derrière, l'élément aérodynamique 34 introduisant une perte de charge uniforme sur toute la section de la sortie 31. Ainsi, il se produit une uniformisation du flux de gaz d'échappement dans la sortie 31. L'élément aérodynamique 34 peut être prévu sous la forme d'une mousse perméable aux gaz d'échappement ou d'une plaque munie de trous uniformément répartis sur toute la surface de la plaque, par exemple une plaque présentant une structure en nid d'abeille.

Bien entendu, on pourrait prévoir un cône d'admission 2 comprenant à la fois un cône déflecteur et un élément aérodynamique introduisant une perte de charge uniformément sur toute la section de la sortie.

Par ailleurs, on notera que le cône présente en section transversale une sortie avec un profil correspondant à l'agencement des cellules élémentaires de filtration, notamment un profil rectangulaire, ovale ou cylindrique correspondant aux dispositions des figures 2 à 4. En outre, l'invention n'est pas limitée aux dispositions tridimensionnelles évoquées dans les modes de réalisation décrits plus haut. D'autres dispositions peuvent être envisagées selon la forme générale que l'on souhaite conférer au système de filtration.

Grâce à l'invention, on obtient un système de filtration électrostatique efficace, tout en étant compact et en présentant des surfaces importantes de filtration pour les gaz d'échappement.

## Revendications

1. Système de filtration des particules de suie contenues dans les gaz d'échappement d'un moteur à combustion interne, comprenant des cellules élémentaires de filtration (7) comportant un passage (10), une électrode externe (8) entourant le passage et perméable aux gaz, une électrode interne (14) s'étendant dans le passage (10), les gaz pénétrant dans le passage et ressortant en traversant l'électrode externe, **caractérisé en ce qu'**il comprend une pluralité de cellules élémentaires (7) de filtration électrostatique, chaque cellule comprenant une électrode centrale filaire interne (14) et une électrode externe (8) comprenant un enchevêtrement de fils métalliques, les cellules élémentaires (7) étant maintenues fixes les unes relativement aux autres, et disposées parallèlement dans une configuration tridimensionnelle en étant maintenues espacées les unes des autres à l'intérieur d'une enveloppe collectrice commune (21) entourant l'ensemble des cellules élémentaires de filtration pour récupérer les gaz d'échappement sortant des cellules élémentaires (7) de filtration après avoir traversé l'enchevêtrement de fils métalliques des électrodes externes (8) de chaque cellule (7) de façon que les particules soient piégées sur les enchevêtrements de fils métalliques.

2. Système selon la revendication 1, **caractérisé en ce que** les cellules élémentaires de filtration (7) sont agencées en au moins deux rangées superposées (23, 24, 25).

3. Système selon la revendication 2, **caractérisé en ce qu'**une rangée (23) est décalée latéralement relativement à une rangée adjacente (24).

4. Système selon l'une des revendications précédentes, **caractérisé en ce qu'**il comprend des cellules élémentaires de filtration (7) arrangées selon un motif en hexagone.

5. Système selon l'une des revendications précédentes, **caractérisé en ce qu'**il comprend des séparateurs (26, 27) disposés entre les cellules élémentaires de filtration (7) pour séparer des écoulements de gaz en sortie des cellules élémentaires de filtration (7).

6. Système selon l'une des revendications précédentes, **caractérisé en ce qu'**au moins une cellule élémentaire de filtration (7) est insérée dans une chemise de séparation (27) entourant ladite cellule de filtration (7).

7. Système selon la revendication 6, **caractérisé en ce qu'**une chemise (27) présente en section un profil en cercle ou en hexagone.

8. Système selon l'une des revendications précédentes, **caractérisé en ce que** les cellules élémentaires (7) sont maintenues en étant fixées d'un côté d'une entrée des passages sur un flasque d'entrée (5) ouvert en regard desdits passage.

9. Système selon la revendication 8, **caractérisé en ce qu'**il comprend un cône d'admission (2) muni d'une entrée de petit diamètre et d'une sortie de grand diamètre débouchant sur le flasque d'entrée (5).

10. Système selon la revendication 9, **caractérisé en ce qu'**il comprend des moyens (32,34) pour uniformiser un écoulement en sortie du cône d'admission (32, 34).

11. Système selon la revendication 10, **caractérisé en ce que** le cône d'admission (2) est muni d'un déflecteur aérodynamique conique (32).

12. Système selon la revendication 10 ou 11, **caractérisé en ce que** la sortie du cône d'admission est muni d'un élément aérodynamique (34) disposé en travers de la sortie du cône pour introduire une perte de charge uniformément sur toute la section de la sortie du cône.

13. Système selon l'une des revendications précédentes 8 à 12, **caractérisé en ce que** les cellules (7) sont fixées du côté opposé aux entrées des passages sur un flasque de sortie (6) pourvu d'ouvertures (22) pour l'évacuation des gaz d'échappement.

## Claims

1. System for filtering soot particulates present in the exhaust gases of an internal combustion engine, comprising elementary filtration cells (7) comprising a passage (10), an outer electrode (8) surrounding the passage and permeable to the gases, an inner electrode (14) extending in the passage (10), the gases entering the passage and exiting by traversing the outer electrode, **characterized in that** it comprises a plurality of elementary electrostatic filtration cells (7), each cell comprising an inner central wire electrode (14) and an outer electrode (8) comprising interlocking metal wires, the elementary cells (7) being secured with regard to one another, and placed in parallel in a three-dimensional configuration, while being kept spaced from one another inside a common collecting envelope (21) surrounding all the elementary filtration cells (7) to recover the exhaust gases leaving the elementary filtration cells (7) after having traversed the interlocking metal wires of the outer electrodes (8) of each cell (7), so that the particulates are trapped on the interlocking metal wires.

2. System according to Claim 1, **characterized in that** the elementary filtration cells (7) are arranged in at least two superimposed rows (23, 24, 25).

3. System according to Claim 2, **characterized in that** one row (23) is laterally offset with regard to an adjacent row (24).

4. System according to one of the preceding claims, **characterized in that** it comprises elementary filtration cells (7) arranged in a hexagonal pattern.

5. System according to one of the preceding claims, **characterized in that** it comprises separators (26, 27) placed between the elementary filtration cells (7) to separate gas flows leaving the elementary filtration cells (7).

6. System according to one of the preceding claims, **characterized in that** at least one elementary filtration cell (7) is inserted into a separating jacket (27) surrounding the said filtration cell (7).

7. System according to Claim 6, **characterized in that** a jacket (27) has a circular or hexagonal profile cross section.

8. System according to one of the preceding claims, **characterized in that** the elementary cells (7) are secured by being fixed on one side of an inlet of the passages to an inlet flange (5) open opposite to the said passages.

9. System according to Claim 8, **characterized in that** it comprises an intake cone (2) fitted with a small diameter inlet and a large diameter outlet terminating on the inlet flange (5).

10. System according to Claim 9, **characterized in that** it comprises means (32, 34) for making a flow uniform at the outlet of the intake cone (2).

11. System according to Claim 10, **characterized in that** the intake cone (2) is fitted with a conical aerodynamic deflector (32).

12. System according to either of Claims 10 and 11, **characterized in that** the outlet of the intake cone (2) is fitted with an aerodynamic element (34) placed across the cone outlet to introduce a pressure drop uniformly over the whole cross section of the cone outlet.

13. System according to one of the preceding Claims 8 to 12, **characterized in that** the cells (7) are fixed on the side opposite the passage inlets to an outlet flange (6) provided with openings (22) for removing the exhaust gases.

## Patentansprüche

1. Filtersystem für Rußpartikel, die in den Abgasen einer Brennkraftmaschine enthalten sind, umfassend Filterelementarzellen (7) mit einem Durchgang (10), eine Außenelektrode (8), die den Durchgang umgibt und gasdurchlässig ist, eine Innenelektrode (14), die im Durchgang (10) verläuft, wobei die Gase in den Durchgang eintreten und austreten, indem sie die Außenelektrode durchströmen, **dadurch gekennzeichnet, dass** es eine Vielzahl von Elementarzellen (7) zur elektrostatischen Filterung aufweist, wobei jede Zelle eine innere Drahtmittelelektrode (14) und eine Außenelektrode (8) umfasst, die aus einer Verflechtung von Metalldrähten besteht, wobei die Elementarzellen (7) relativ zueinander feststehend sind und in einer dreidimensionalen Konfiguration parallel angeordnet sind, wobei sie im Inneren eines gemeinsamen Sammelgehäuses (21), das die Gesamtheit der Filterelementarzellen (7) umgibt, voneinander beabstandet gehalten werden, um die aus den Filterelementarzellen (7) austretenden Abgase zurückzugewinnen, nachdem sie die Metalldrahtverflechtung der Außenelektrode (8) jeder Zelle (7) durchströmt haben, wodurch die Partikel von der Metalldrahtverflechtung aufgefangen werden.

2. System nach Anspruch 1, **dadurch gekennzeichnet, dass** die Filterelementarzellen (7) in mindestens zwei übereinander liegenden Reihen (23, 24, 25) angeordnet sind.

3. System nach Anspruch 2, **dadurch gekennzeichnet, dass** eine Reihe (23) relativ zu einer benachbarten Reihe (24) seitlich versetzt ist.

4. System nach einem der vorherigen Ansprüche, **dadurch gekennzeichnet, dass** es Filterelementarzellen (7) aufweist, die in einem Sechseckmuster angeordnet sind.

5. System nach einem der vorherigen Ansprüche, **dadurch gekennzeichnet, dass** es Trenner (26, 27) umfasst, die zwischen den Filterelementarzellen (7) angeordnet sind, um die Gasströme am Auslass der Filterelementarzellen (7) zu trennen.

6. System nach einem der vorherigen Ansprüche, **dadurch gekennzeichnet, dass** mindestens eine Filterelementarzelle (7) in einen Trennmantel (27) eingeführt ist, der diese Filterzelle (7) umgibt.

7. System nach Anspruch 6, **dadurch gekennzeichnet, dass** ein Mantel (27) einen Querschnitt mit kreisförmigem oder sechseckigem Profil aufweist.

8. System nach einem der vorherigen Ansprüche, **dadurch gekennzeichnet, dass** die Elementarzellen (7) gehalten werden, indem sie auf einer Einlassseite der Durchgänge an einer Einlassscheibe (5) befestigt sind, die diesen Durchgängen gegenüber offen ist.

9. System nach Anspruch 8, **dadurch gekennzeichnet, dass** es einen Einströmkonus (2) umfasst, der mit einem Einlass mit kleinem Durchmesser und einem Auslass mit großem Durchmesser versehen ist, der an der Einlassscheibe (5) ausläuft.

10. System nach Anspruch 9, **dadurch gekennzeichnet, dass** es Mittel (32, 34) umfasst, um die Strömung am Auslass des Einströmkonus (2) zu vereinheitlichen.

11. System nach Anspruch 10, **dadurch gekennzeichnet, dass** der Einströmkonus (2) mit einem konischen aerodynamischen Leitblech (32) versehen ist.

12. System nach Anspruch 10 oder 11, **dadurch gekennzeichnet, dass** der Einströmkonus (2) mit einem aerodynamischen Element (34) versehen ist, das quer durch den Auslass des Konus angeordnet ist, um auf dem gesamten Querschnitt des Auslasses des Konus einen einheitlichen Druckabfall zu bewirken.

13. System nach einem der Ansprüche 8 bis 12, **dadurch gekennzeichnet, dass** die Zellen (7) auf der Gegenseite der Einlässe der Durchgänge an einer Auslassscheibe (6) befestigt sind, die mit Öffnungen (22) zur Ableitung der Abgase versehen ist.
